# EUROPEAN PATENT APPLICATION

(11) **EP 1 112 831 A1**
(43) Date of publication of application: **04.07.2001**
(21) Application number: 00204300.8
(22) Date of filing: 04.12.2000
(51) Int. Cl.: B29C 45/16

(54) **Method of making an interior trim panel**

(30) Priority: 30.12.1999 US 173636 P
(71) Applicant: Delphi Technologies, Inc., Troy, MI 48007 (US)
(72) Inventor: Brodi, James J., Jr., Sterling Heights, MI 48314 (US); Visconti, Carl H., Clarkston, MI 48348 (US); Shah, Suresh D., Troy, MI 48098 (US); Jary, Michael W., Farmington Hills, MI 48335 (US)
(74) Representative: Denton, Michael John

(57) **Abstract**

A method of making an interior trim panel (10) for attachment to structure of a vehicle (14) includes the steps of loading a trim blank (26) into a cavity (33) of a first side (32) of a mold (30) and depositing a molten thermoplastic material onto a core on the first side (32) of the mold. The method also includes the steps of closing the mold, moving the slide (42) in a channel (44) of the core, and injecting a molten thermoplastic material into a second side (34) of the mold (34) to form the interior trim panel (10).

## Description

### CROSS-REFERENCE TO RELATED APPLICATION(S)

The present invention claims the priority date of copending United States Provisional Patent Application Serial Number 60/173,636, filed December 30, 1999.

### TECHNICAL FIELD

The present invention relates generally to interior trim panels for vehicles and, more particularly, to a method of making an interior trim panel for a vehicle.

### BACKGROUND OF THE INVENTION

It is known to provide an interior trim panel for a vehicle to present an aesthetically pleasing appearance in an occupant compartment of the vehicle. The interior trim panel typically includes a trim blank attached to a carrier or substrate by several different conventional processes including adhesives, heat staking, sonic welding, and fasteners. The interior trim panel may be mounted to structure of the vehicle such as an inner door panel of a door for the vehicle by suitable means such as fasteners.

Although the above interior trim panel and method of making has worked, it is desirable to reduce the costs associated with the manufacture of an interior trim panel. It is also desirable to provide an interior trim panel with reduced mass, tooling, and equipment per vehicle. Therefore, there is a need in the art to provide an improved method of making an interior trim panel for a vehicle.

### SUMMARY OF THE INVENTION

It is, therefore, one object of the present invention to provide a new method of making an interior trim panel for a vehicle.

It is another object of the present invention to provide a method of making an interior trim panel that combines extrusion deposition and injection molding into a single step.

It is yet another object of the present invention to provide a method of making a door trim panel that has less cost.

To achieve the foregoing objects, the present invention is a method of making an interior trim panel for attachment to structure of a vehicle. The method includes the steps of loading a trim blank into a cavity of a first side of a mold and depositing a molten thermoplastic material onto a core on the first side of the mold. The method also includes the steps of closing the mold, moving the slide in a channel of the core, and injecting a molten thermoplastic material into a second side of the mold to form the interior trim panel.

One advantage of the present invention is that an improved method of making an interior trim panel is provided for a vehicle. Another advantage of the present invention is that the method of making the interior trim panel is a lean manufacturing method with in-mold lamination for obtaining a trim panel which is partially clad with trim while another area is grained, molded in color (class A interior surface) in a single step process using the same equipment. Yet another advantage of the present invention is that the method of making the interior trim panel reduces cost as opposed to a two-piece construction and by using a lower-cost, uncolored, material for Side A, including the possible use of multi-color regrind. Still another advantage of the present invention is that the method of making the interior trim panel reduces material cost by using low cost material behind the trim cover area and more structural material at a lower cost. A further advantage of the present invention is that the method of making the interior trim panel provides good surface appearance at a junction of the trim and straight injection molded surface. Yet a further advantage of the present invention is that the method of making the interior trim panel provides ease of processibility and design flexibility by providing an opportunity to design trim panels with less cost.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is an interior trim panel made by a method, according to the present invention, illustrated in operational relationship with a vehicle.

Figure 2 is a fragmentary side view of a mold used in a method, according to the present invention, of making the interior trim panel of Figure 1 illustrated in an open position.

Figure 3 is a partial fragmentary view of a movable slide of the mold of Figure 2 illustrated in a first position with the mold closed.

Figure 4 is a partial fragmentary view of a movable slide of the mold of Figure 2 illustrated in a second position with the mold closed.

Figure 5 is a fragmentary side view of the mold of Figure 2 illustrated in an open position.

Figure 6 is a fragmentary side view of the mold of Figure 2 illustrated in a closed position for molding of side A of the interior trim panel.

Figure 7 is a fragmentary side view of the mold of Figure 2 illustrated in a closed position for molding of side B of the interior trim panel.

### DESCRIPTION OF THE PREFERRED EMBODIMENT

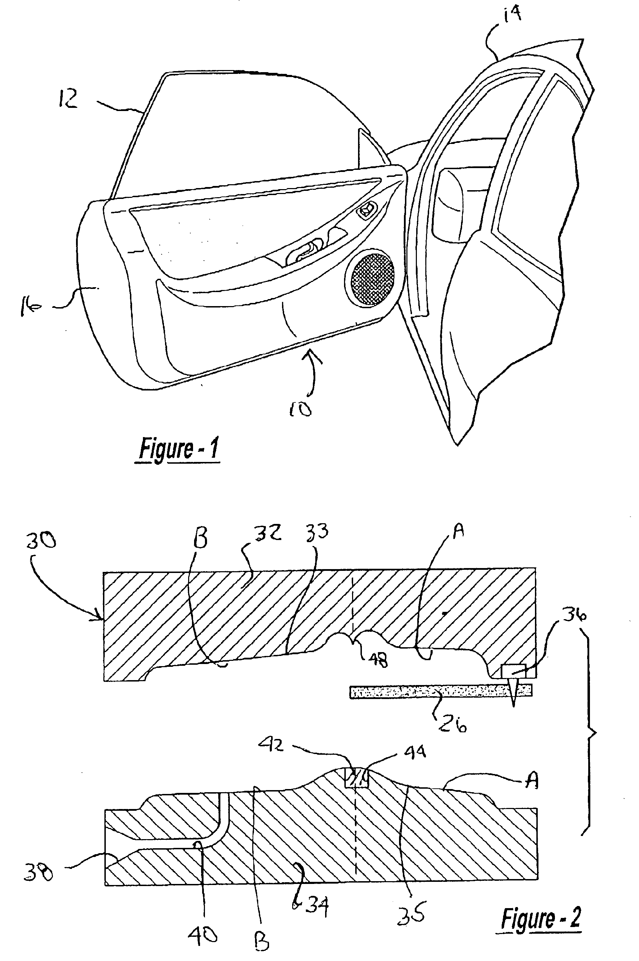

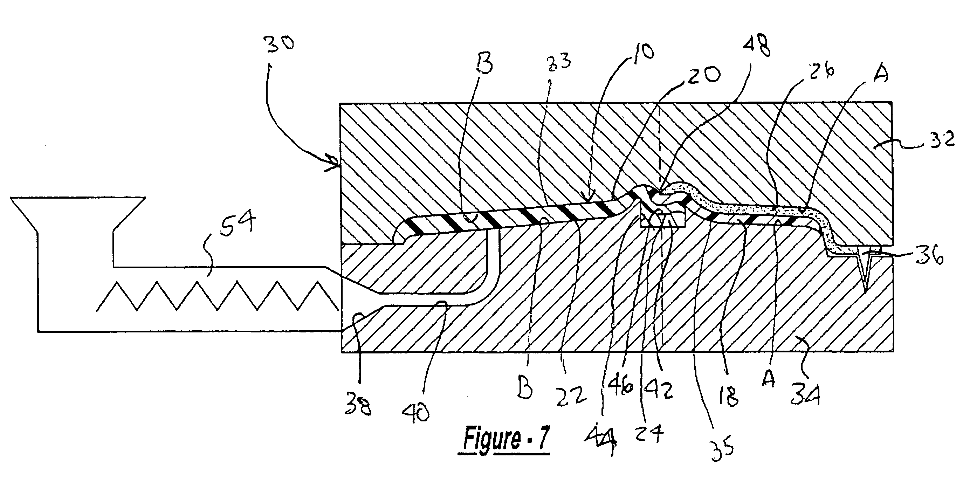

Referring to the drawings and in particular Figure 1, one embodiment of an interior trim panel 10, according to the present invention, is shown mounted to structure such as a door 12 of a vehicle 14 such as an automotive vehicle. It should be appreciated that, in this example, the interior trim panel 10 is mounted to an inner panel 16 of the door 12. It should also be appreciated that the interior trim panel 10 may be mounted to other structure or panels of the vehicle 14.

Referring to Figures 1 and 7, the interior trim panel 10 includes a carrier 18 extending longitudinally and vertically and having a generally rectangular shape. The carrier 18 is made of a thermoplastic material such as polypropylene. The carrier 18 is formed by a method, according to the present invention, to be described. The carrier 18 has an inner side 20 and an outer side 22. The carrier 18 has a projection 24 formed adjacent an edge of a trim blank 26 to be described. The outer side 22 is attached to the inner panel 16 of the door 12 by suitable means such as fasteners (not shown). It should be appreciated that the carrier 18 is partially clad with the trim blank 26 to be described for the interior trim panel 10.

The interior trim panel 10 also includes a trim blank 26 incorporated or integrated into the carrier 18. The trim blank 26 extends longitudinally and vertically. The trim blank 26 is made of a fabric, cloth, vinyl, TPO (Thermoplastic Polyolifin), leather, or carpet material. Preferably, the trim blank 26 is pre-cut or pre-blanked by a conventional process known in the art. The trim blank 26 is disposed over and bonded to the inner side 20 of the carrier 18 by melting and fusion of the plastic material of the carrier 18. It should be appreciated that the trim blank 26 covers only a portion on one side of the projection 24 of the carrier 18. It should also be appreciated that the trim blank 26 is a separate piece or component.

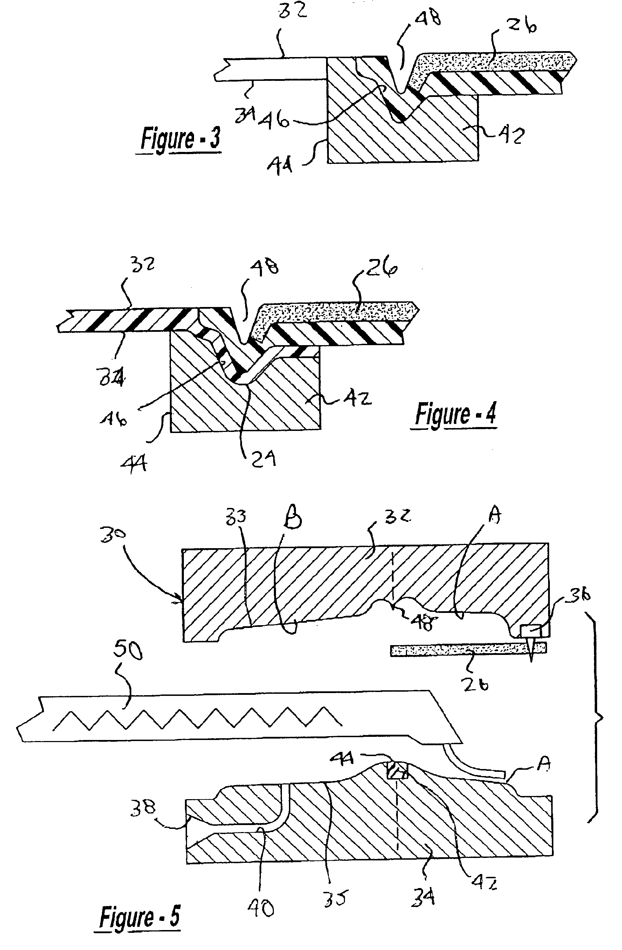

Referring to Figures 2 through 7, a method, according to the present invention, of making the interior trim panel 10 is disclosed. The method involves combining extrusion deposition compression molding (EDCM) with injection molding or injection-compression molding (ICM). As illustrated, a mold, generally indicated at 30, includes a first half mold 32 and a second half mold 34. The first half mold 32 is the mold cavity and the second half mold 34 is the mold core. The first half mold 32 has a cavity portion 33 and the second half mold 34 has a core portion 35. The first half mold 32 and second half mold 34 could be mounted to platens (not shown) of a press (not shown) such as a vertical molding press with sufficient tonnage to accomplish the method to be described with the cavity up or cavity down. The first half mold 32 has a trim loading system 36 such as a slip device or pin frame, preferably a three-sided pin frame. The trim loading system 36 accommodates loading of the trim blank 26 as part of an insert molding process and may be a slip frame or manual loading system. The second half mold 34 has an inlet 38 and a passage 40 for allowing a fluid material such as molten plastic or plastic melt to enter between the first and second half molds 32 and 34. The mold 30 also includes a movable slide 42 movable along a channel 44 in the second half mold 34 between an extended position as illustrated in Figure 3 and a retracted position as illustrated in Figure 4. The slide 42 has a groove or recess 46 therein for a function to be described. The mold 30 further includes a blade 48 extending along the first half mold 32 and cooperating with the recess 46 of the slide 42. It should be appreciated that, for purposes of description, the mold 30 will have two sides or portions A and B on the first half mold 32 and second half mold 34. It should also be appreciated that the side A will be the area of the interior trim panel 10 to be covered by the trim blank 26 and side B will be the area of the interior trim panel 10 to have an interior "Class A" surface.

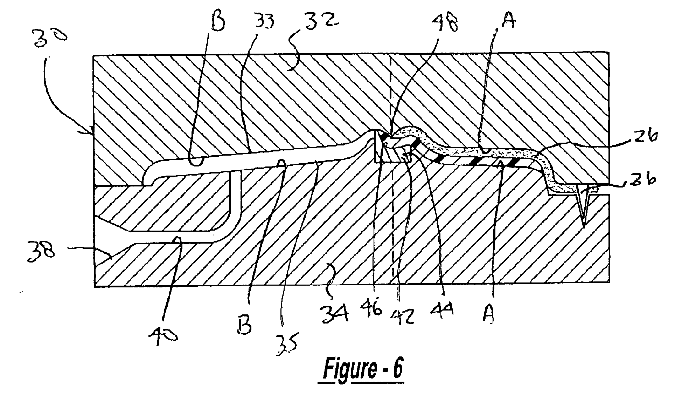

The method, according to the present invention, includes the step of loading the trim blank 26 onto the cavity portion 33 of the first half mold 32 on side A as illustrated in Figure 2. The trim blank 26 can be unformed or preformed using known thermoforming processes. The method includes the step of moving the slide 42 by extending the slide 42 into the cavity area, separating side A from side B in the mold 30 as illustrated in Figure 3. The method includes the step of providing a ECDM deposition unit 50 with an extrusion head with X-Y-Z axis positioning capability and depositing by extruding a plastic melt as a strand or a sheet in the mold area or core portion 35 corresponding to side A of the finished interior trim panel 10 onto the second half mold 44 as illustrated in Figure 5. The method includes the step of closing the mold 30 and causing the plastic melt to flow and fill side A of the mold cavity and resulting in adhesion to the back of the trim blank 26 while it is formed into the shape of the mold cavity (if not preformed) as illustrated in Figure 6. The blade 48 is disposed in the recess 46 of the slide 42 and prevents overflow of the plastic melt to form a portion of the projection 24. It should be appreciated that the projection 24 will provide a sharp distinction of the trim blank 26 adjacent to the molded-in-color show surface of the carrier 18.

The method includes the step of providing a fixed injection unit 54, positioned to inject molten plastic directly into the inlet or sprue 38 on the side of the second half mold 34. The method includes the step of moving the slide 42 by retracting the slide 42 away from the blade 48 as illustrated in Figure 4. The method includes the step of injecting plastic melt from the fixed injection unit 54, which flows through the passage 40 into the mold cavity on side B, filling side B as illustrated in Figure 7. The method includes cooling the mold 30 for a required cooling time and opening the mold 30 and removing the partially clad, molded interior trim panel 10.

Alternatively, as the movable slide 42 between side A and side B is retracted, the mold 30 is opened slightly and plastic melt is injected from the fixed injection unit 54, filling side B of the panel. The mold 30 is then fully closed, causing the molding plastic to completely fill side B of the mold cavity. It should be appreciated that these steps are similar to injection compression molding (ICM).

Accordingly, the method provides the combination of extrusion deposition molding and injection molding in a single manufacturing step to make a trim panel, which is partially covered, and partially exposed having a class A interior surface. The method also prevents overflow of the melt during EDCM step and to have sharp distinction of the trim material adjacent to the molded-in-color show surface.

The present invention has been described in an illustrative manner. It is to be understood that the terminology, which has been used, is intended to be in the nature of words of description rather than of limitation.
Many modifications and variations of the present invention are possible in light of the above teachings. Therefore, within the scope of the appended claims, the present invention may be practiced other than as specifically described.

## Claims

1. A method of making an interior trim panel (10) for attachment to structure of a vehicle (14), said method comprising the steps of:
loading a trim blank (26) into a cavity (33) of a first side (32) of a mold (30);
depositing a molten thermoplastic material onto a core on the first side (32) of the mold;
closing the mold;
moving the slide (42) in a channel (44) of the core; and
injecting a molten thermoplastic material into a second side (34) of the mold (34) to form the interior trim panel (10).

2. A method as set forth in claim 1 wherein said step of injecting includes forming a carrier (18) from the thermoplastic material and bonding the carrier (18) to the trim blank (26).

3. A method as set forth in claim 1 wherein said step of depositing comprises extruding the thermoplastic material onto the core of the mold.

4. A method as set forth in claim 1 including the step of moving the slide (42) to an extended position prior to said step of closing the mold.

5. A method as set forth in claim 1 wherein said step of moving the slide (42) comprises moving the slide (42) to a retracted position after said step of closing the mold.

6. A method as set forth in claim 1 wherein said step of loading comprises loading the trim blank (26) into a slip device (36) on the mold.

7. A method as set forth in claim 1 wherein said step of injecting comprises providing a fixed injection unit (54) and injecting molten plastic into the mold.

8. A method as set for the in claim 7 including the step of cooling the interior trim panel (10).

9. A method as set forth in claim 8 including the step of opening the mold.

10. A method as set forth in claim 9 including the step of removing the interior trim panel (10) from the mold.

11. A method as set forth in claim 1 including the step of pre-cutting the trim blank (26).

12. A method as set forth in claim 1 including the step of starting one step before a previous step has been completed.

13. A method of making an interior trim panel (10) for attachment to an inner panel (16) of a vehicle (14), said method comprising the steps of:
loading a trim blank (26) into a cavity (33) of a mold on a first side (32) thereof;
depositing a molten thermoplastic material onto a core of the mold on the first side (32) thereof;
closing the mold to form a first portion of the interior trim panel (10);
moving the slide (42) in a channel (44) of the core; and
injecting a molten thermoplastic material into the mold and forcing the molten plastic material into a second side (34) of the mold (34) to form a second portion of the interior trim panel (10).

14. A method as set forth in claim 13 wherein said step of injecting includes forming a carrier (18) from the thermoplastic material and bonding the carrier (18) to the trim blank (26).

15. A method as set forth in claim 13 wherein said step of depositing comprises extruding the thermoplastic material onto the core of the mold.

16. A method as set forth in claim 13 wherein said step of loading comprises loading the trim blank (26) into a slip device (36) on the mold.

17. A method as set forth in claim 13 wherein said step of moving the slide (42) comprises retracting the slide (42) to a retracted position after said step of closing.

18. A method as set for the in claim 17 including the step of opening the mold.

19. A method as set forth in claim 18 including the step of removing the interior trim panel (10) from the mold.

20. A method of making a door trim panel (10) for attachment to an inner panel (16) of a door (12) of a vehicle (14), said method comprising the steps of:
loading a trim blank (26) into a cavity (33) of a mold on a first side (32) thereof;
depositing a molten thermoplastic material onto a core of the mold on the first side (32) thereof;
closing the mold to form a first portion of the interior trim panel (10);
moving the slide (42) into a channel (44) of the core; and
injecting a molten thermoplastic material into a second side (34) of the mold (34) and forcing the molten plastic material into the second side (34) of the mold (34) to form a second portion of the door trim panel (10).
